# EUROPEAN PATENT APPLICATION

(11) **EP 4 164 033 A1**
(43) Date of publication of application: **12.04.2023**
(21) Application number: 21214980.1
(22) Date of filing: 16.12.2021
(51) Int. Cl.: H01M 50/159, H01M 50/474, H01M 50/486, H01M 50/184, H01M 50/186, H01M 50/552, H01M 50/566

(54) **COVER ASSEMBLY, METHOD OF PROCESSING THE SAME, AND BATTERY**

(30) Priority: 08.10.2021 CN 202111169104
(71) Applicant: Juheyuan Science & Technology Co., Ltd., Shenzhen, Quangdong 518116 (CN)
(72) Inventor: CHENG, Kewen, Shenzhen, 518031 (CN)
(74) Representative: Appleyard Lees IP LLP

(57) **Abstract**

The present application relates to a cover assembly, and a method of processing the cover assembly, and a battery. The cover assembly is configured to cover on a housing, provided with an accommodating cavity, of a battery. The cover assembly includes a top cover, an insulating piece, and an anode piece. The top cover is configured to cover the accommodating cavity, the top cover includes a first connection layer having a molecular structure different from other portions thereof, the anode piece includes a second connection layer having a molecular structure different from other portions thereof, the insulating piece is stacked between the first connection layer and the second connection layer, and the insulating piece is connected to the first connection layer and the second connection layer by hot-melting.

## Description

### TECHNICAL FIELD

The present application relates to the technical field of batteries, and in particular to a cover assembly, and a method of processing the same, and a battery including the same.

### BACKGROUND

Portable electronic devices and smart wearable devices have extremely wide applications in people's production and daily life. The aforementioned devices have a development trend of becoming more and more miniaturized. As a core component that provides energy for the normal operation of the aforementioned devices, the battery also requires a more miniaturized design, so there comes the small-volume button battery. The button battery has the characteristics of high energy density, good storage performance, small self-discharge, long service life and the like. However, for the convention button battery, when the battery capacity is to be improved to enhance its own endurance capacity, it usually leads to the increase of the thickness and the volume of the button battery; and when the thickness and the volume of the button battery are to be reduced, the capacity and endurance capacity of the battery are usually reduced. Therefore, the conventional button battery cannot take into account both its own large capacity and small volume.

### SUMMARY

According to various embodiments of the present application, a cover assembly, and a method of processing the same, and a battery including the same are provided.

A cover assembly is configured to cover on a housing, provided with an accommodating cavity, of a battery. The cover assembly includes a top cover, an insulating piece, and an anode piece. The top cover is configured to cover the accommodating cavity, the top cover includes a first connection layer having a molecular structure different from other portions thereof, the anode piece includes a second connection layer having a molecular structure different from other portions thereof. The insulating piece is stacked between the first connection layer and the second connection layer, and the insulating piece is connected to the first connection layer and the second connection layer by hot-melting.

In one of the embodiments, the top cover and the anode piece are both made of stainless steel material, the insulating piece is made of polypropylene material, and the first connection layer and the second connection layer each includes a passivation layer.

In one of the embodiments, cross-sectional dimensions of the insulating piece and the anode piece are less than a cross-sectional dimension of the top cover, and orthographic projections of both the insulating piece and the anode piece in a thickness direction of the top cover are located within the top cover.

In one of the embodiments, taking a direction perpendicular to an axial direction of the housing as a reference direction, intervals are formed between the insulating piece and an edge of the anode piece, and between the insulating piece and an edge pf the top cover.

In one of the embodiments, the insulating piece includes an exposed portion, the exposed portion is disposed around the anode piece and is located outside a coverage area of the anode piece.

A battery includes a housing and the cover assembly of any one of the aforementioned embodiments. The housing is provided with the accommodating cavity, and the top cover and the housing is connected to cover the accommodating cavity.

A method of processing a cover assembly, including:
chemically treating a top cover to form a first connection layer having a molecular structure different from other portions thereof;
chemically treating an anode piece to form a second connection layer having a molecular structure different from other portions thereof; and
connecting an insulating piece to the first connection layer and the second connection layer by hot-melting.

In one of the embodiments, the top cover and the anode piece are both made of stainless steel material, the chemical treating includes a passivation treating such that the first connection layer and the second connection layer each includes a passivation layer.

In one of the embodiments, the insulating piece is integrally connected to the first connection layer and the second connection layer by hot-melting, respectively.

In one of the embodiments, the insulating piece includes a first insulating portion and a second insulating portion capable of being stacked to each other. After the first insulating portion and the second insulating portion are connected to the first connection layer and the second connection layer by hot-melting, respectively, the first insulating portion and the second insulating portion are connected by hot-melting.

In one of the embodiments, a roughness of the first connection layer and a roughness of the second connection layer are maintained between 0.8 µm and 6.3 µm, and then the insulating piece is connected to the first connection layer and the second connection layer by hot-melting.

An embodiment of the present application has a technical effect that, in view of that the insulating piece is connected to the first connection layer and the second connection layer by hot-melting, the first connection layer and the second connection layer are the component parts composed of the insulating piece and the anode piece themself. In this way, on one hand, the presence of other additional connection layers between the insulating piece and the top cover are effectively avoided, and on the other hand, the presence of other additional connection layers between the insulating piece and the anode piece are avoided, thereby eliminating the increased thickness caused by other additional connection layers and effectively simplifying the structure of the entire cover assembly. In addition, the thicknesses of the cover assembly and the entire battery are reduced, and the volume of the battery is reduced to achieve a miniaturized arrangement. Moreover, the influence of the aforementioned configuration on the accommodating cavity can be negligible, so as to ensure that the accommodating cavity has a large enough volume to ensure that the battery has a reasonable capacity and endurance capacity, and finally ensure that the battery can take into account the two core parameters of both large capacity and small volume, and the improvement of one parameter will not be at the expense of the other parameter.

### BRIEF DESCRIPTION OF THE DRAWINGS

FIG. 1 is a perspective view of a battery according to an embodiment.
FIG. 2 is a perspective cross-sectional view of the battery shown in FIG. 1.
FIG. 3 is a planar cross-sectional view of the battery shown in FIG. 1.
FIG. 4 is an exploded view of the battery shown in FIG. 1.
FIG. 5 is a partial perspective cross-sectional view of FIG. 4.
FIG. 6 is a partial planar cross-sectional view of a cover assembly of the battery shown in FIG. 1 according to a first example.
FIG. 7 is a partial planar cross-sectional view of the cover assembly of the battery shown in FIG. 1 according to a second example.
FIG. 8 is a flowchart of a method of processing a cover assembly according to an embodiment.

### DETAILED DESCRIPTION OF THE EMBODIMENTS

In order to facilitate the understanding of the present application, the present application will be described in a more comprehensive manner with reference to the relevant drawings. Preferred embodiments of the application are shown in the drawings. However, the present application can be implemented in many different forms and is not limited to the embodiments described herein. On the contrary, the purpose of providing these embodiments is to make the application of the present application more thorough and comprehensive.

It should be noted that when an element is referred to as being "fixed to" another element, it may be directly on another element or there may also be an intermediate element therebetween. When an element is considered to be "connected" to another element, it may be directly connected to another element or there may be an intermediate element therebetween. As used herein, the terms "inner", "outer", "left", "right", and similar expressions are for illustration only and are not meant to be the only embodiments.

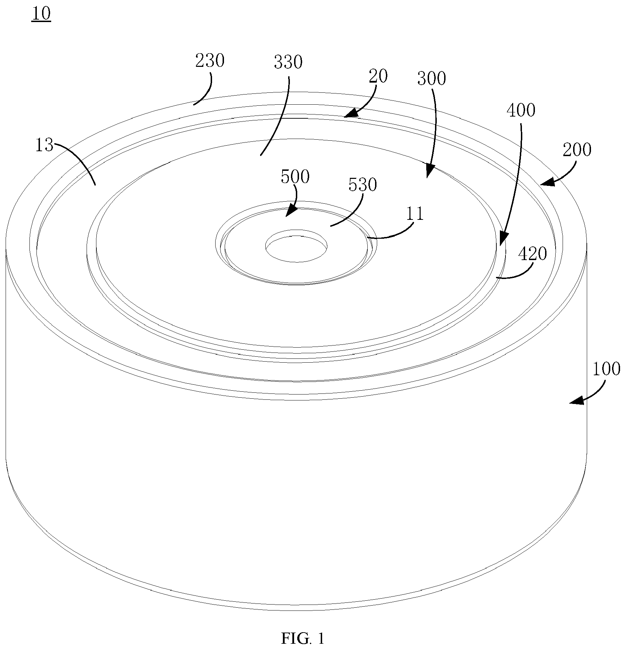

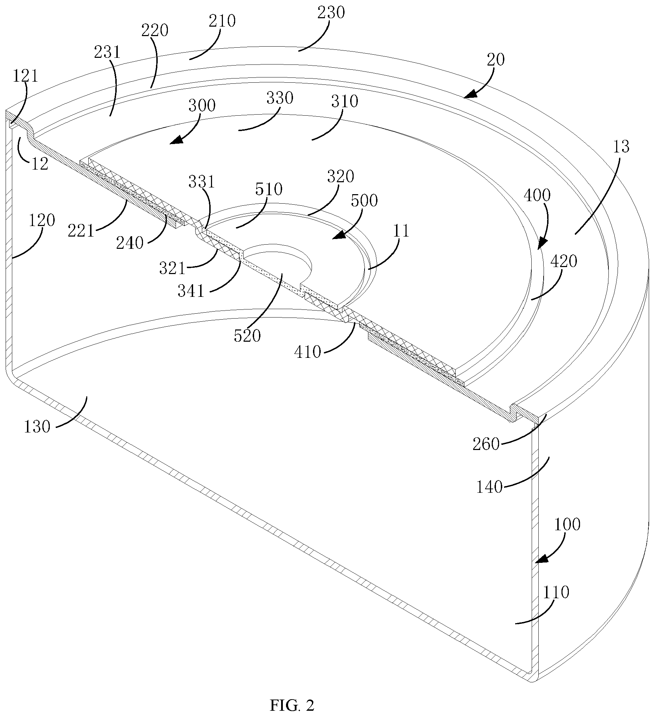

Referring to FIGS. 1, 2, and 3, a battery 10 according to an embodiment of the present application includes a housing 100, a cover assembly 20, and a rolling core assembly (not shown). The cover assembly 20 includes a top cover 200, an anode piece 300, an insulating piece 400, and a sealing member 500. In a specific embodiment, the cover assembly 20 may be formed by the top cover 200, the anode piece 300, the insulating piece 400, and the sealing member 500.

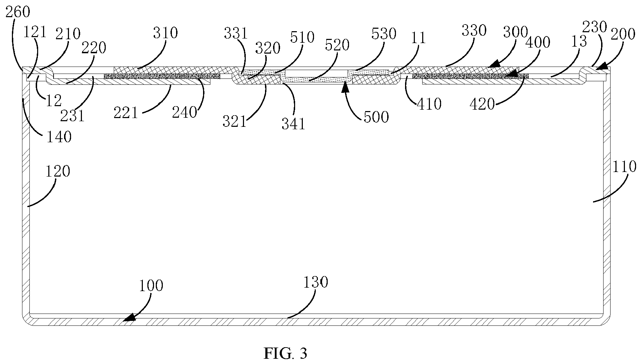

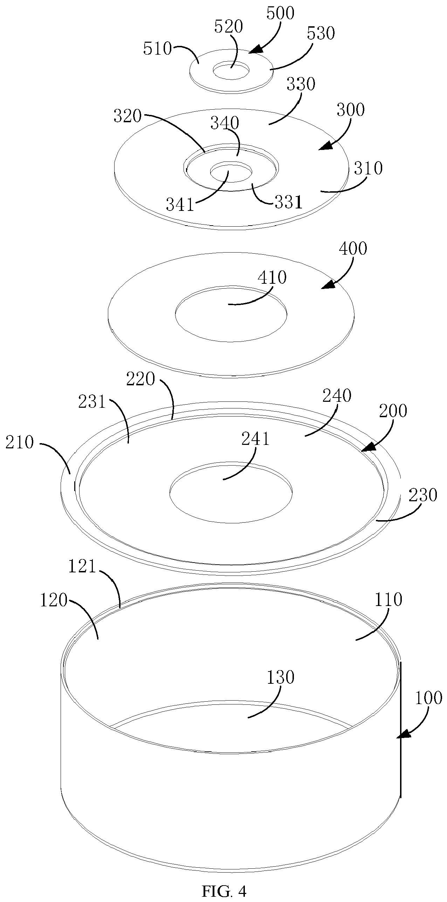

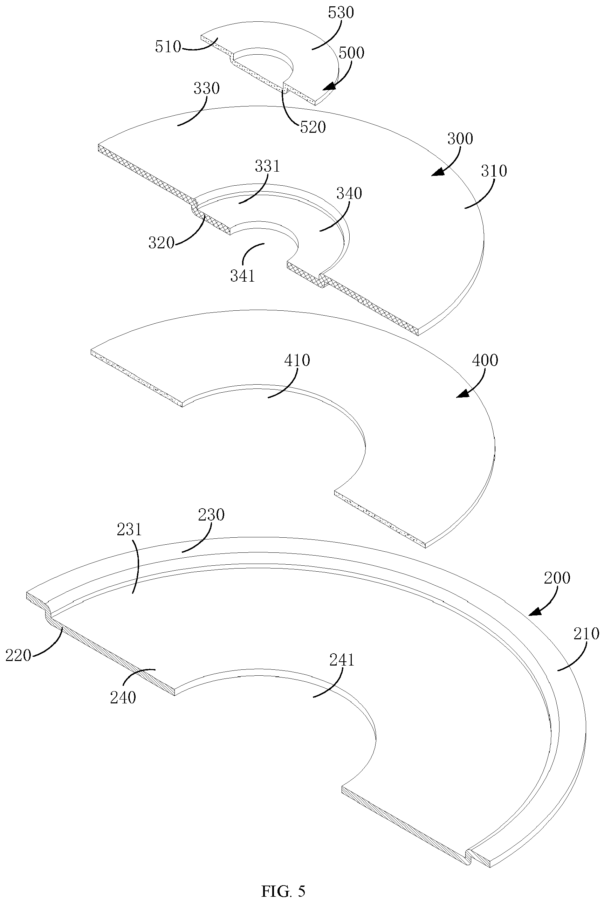

Referring to FIGS. 3, 4, and 5, in some embodiments, the housing 100 may be made of a stainless steel material. The housing 100 may have a cylindrical tubular structure, that is, the housing 100 may enclose an accommodating cavity 110, which is an open cavity having an opening. Obviously, when the housing 100 is independently present, the accommodating cavity 110 is in direct communication with the outside through the opening. Of course, the housing 100 may also have a shape of prismatic, such as a quadrangular prism or a hexagonal prism, etc. The housing 100 has an inner side peripheral surface 120 and an inner bottom surface 130. The inner bottom surface 130 may be a horizontally arranged circular surface. The inner side peripheral surface 120 may be a vertically arranged annular surface. A lower end of the inner side peripheral surface 120 is connected to a periphery of the inner bottom surface 130 such that the inner side peripheral surface 120 is arranged around the inner bottom surface 130. Both the inner side peripheral surface 120 and the inner bottom surface 130 cooperatively define a boundary of the accommodating cavity 110. When the housing 100 has a shape of cylinder, an outer diameter of the housing 100 may be 12.2 mm.

The rolling core assembly is accommodated in the accommodating cavity 110, and an electrolyte is stored in the rolling core assembly. When the accommodating cavity 110 is larger, a volume of the rolling core assembly may be larger, such that an electric quantity stored by the battery 10 is larger, thereby increasing the capacity of the entire battery 10 and the endurance capacity of the battery 10. On the contrary, when the accommodating cavity 110 is smaller, the volume of the rolling core assembly is smaller, such that the electric quantity stored by the battery 10 is smaller, thereby decreasing the capacity of the entire battery 10 and the endurance capacity of the battery 10. In short, a volume size of the accommodating cavity 110 is directly proportional to the capacity and endurance capacity of the battery 10. The rolling core assembly can be provided with an anode tab strip and a cathode tab strip thereon. One end of the cathode tab strip is connected to the rolling core assembly, and the other end of the cathode tab strip is welded to the housing 100, such that it can be understood that the housing 100 can be used as a cathode of the battery.

In some embodiments, a sunken platform 121 is provided on the housing 100. Specifically, the sunken platform 121 is formed by an upper end of the inner side peripheral surface 120 adjacent the opening. Taking a central axis of the housing 100 as a reference, when the housing 100 has a shape of cylinder, a direction perpendicular to the central axis can be understood as a radial direction of the housing 100, and the upper end of the inner side peripheral surface 120 is recessed by a set depth along the radial direction of the housing 100 to form the sunken platform 121. By forming the sunken platform 121, the volume of the accommodating cavity 110 can be reasonably increased on the basis of ensuring that the housing 100 has enough structural strength, such that the capacity and the endurance capacity of the battery 10 can be increased to a certain extent.

Referring to FIGS. 3, 4, and 5, in some embodiments, the top cover 200 may have a substantially circular shape. The top cover 200 is connected to the housing 100, that is, an edge of the top cover 200 is connected to an upper end of the housing 100, such that the top cover 200 can seal the opening of the accommodating cavity 110. The top cover 200 may also be made of a stainless steel material, and both the top cover 200 and the housing 100 can be directly connected by welding, such that a structure of the top cover 200 can be simplified, and a connection strength between the top cover 200 and the housing 100 can be increased. The top cover 200 has an outer side surface 260 located outside the accommodating cavity 110, and the housing 100 has an outer side peripheral surface 140 located outside the accommodating cavity 110. The outer side surface 260 and the outer side peripheral surface 140 may be flush with each other.

The top cover 200 further has a top surface 230 disposed facing away from the accommodating cavity 110, and obviously, the top surface 230 is disposed facing away from the inner bottom surface 130 of the housing 100. The top surface 230 is recessed towards the accommodating cavity 110 to form a counterbore 231. In an embodiment, a central portion of the top surface 230 is recessed downward by a set depth to form the counterbore 231, and the counterbore 231 is used to accommodate the anode piece 300. A recessed depth of the counterbore 231 may be about 0.25 mm, for example, the recessed depth may be in a range from 0.20 mm to 0.30 mm. The recessed depth of the counterbore 231 may specifically be 0.20 mm, 0.22 mm, 0.25 mm, or 0.30 mm.

The configuration of the top cover 200 can also be presented in the following manner. The top cover 200 includes a substrate portion 210 and a recessed portion 220. The substrate portion 210 and the recessed portion 220 are connected to each other, that is, the substrate portion 210 is connected around an edge of the recessed portion 220. The top surface 230 is disposed on the substrate portion 210, and the recessed portion 220 is disposed protruding downward towards the inner bottom surface 130 relative to the substrate portion 210. In short, the recessed portion 220 protrudes downward by a certain length relative to the substrate portion 210. Both the substrate portion 210 and the recessed portion 220 cooperatively enclose the aforementioned counterbore 231. An edge of the substrate portion 210 away from the recessed portion 220 is welded to the housing 100. The recessed portion 220 is accommodated in the accommodating cavity 110. Along the radial direction of the housing 100, a certain gap 12 is formed between the recessed portion 220 and the inner side peripheral surface 120. By providing the gap 12, the recessed portion 220 can occupy as little space of the accommodating cavity 110 as possible, thereby ensuring that the accommodating cavity 110 has enough volume to improve the capacity and endurance capacity of the battery 10. An outer diameter of the substrate portion 210 may be approximately equivalent to an outer diameter of the housing 100. A thickness of the substrate portion 210 may be about 0.15 mm. A size occupied by the entire top cover 200 in a thickness direction of the battery 10 may be about 0.4 mm, which can be understood as a sum of the thickness of the substrate portion 210 and a thickness of the recessed portion 220 is about 0.4 mm. An outer diameter of the recessed portion 220 may be approximately 91% of an outer diameter of the entire top cover 200.

In view of that the top cover 200 is recessed and formed with the counterbore 231, the top cover 200 may have a lower bottom surface 240. The lower bottom surface 240 is a horizontally arranged circular surface. The lower bottom surface 240 may be disposed parallel to an inner bottom surface 130 of the housing 100 and define part of a boundary of the counterbore 231. Obviously, the lower bottom surface 240 is located in the recessed portion 220, and the lower bottom surface 240 is disposed facing away from the accommodating cavity 110. A middle portion of the lower bottom surface 240 is further recessed downward to form a through hole 241, and the through hole 241 extends through the entire top cover 200 in the thickness direction of the top cover 200, such that a lower end of the through hole 241 is in communication with the accommodating cavity 110 and an upper end of the through hole 241 is in communication with the counterbore 231. Obviously, the through hole 241 is formed on the recessed portion 220. When the entire top cover 200 is welded to the housing 100, an electrolyte may be injected into the accommodating cavity 110 through the through hole 241, such that the electrolyte is stored in the rolling core assembly. Therefore, the through hole 241 is mainly used for the electrolyte to be injected into the accommodating cavity 110. The recessed portion 220 also has a first surface 221 disposed opposite to an orientation of the lower bottom surface 240, that is, the first surface 221 is arranged facing the accommodating cavity 110. The through hole 241 extends through the first surface 221, and the first surface 221 is farthest from the top surface 230 relative to the other surfaces of the top cover 200 in a thickness direction of the entire battery 10.

Referring to FIGS. 3, 4, and 5, in some embodiments, the insulating piece 400 may be an insulator made of a non-metallic material, for example, the insulating piece 400 may be made of a polypropylene (PP) material. The insulating piece 400 is provided with a mounting hole 410 formed in the middle of the insulating piece 400. The mounting hole 410 extends through the entire insulating piece 400 in a thickness direction of the insulating piece 400. Thus, the insulating piece 400 has a substantially annular structure. A diameter of the mounting hole 410 may be appropriately less than a diameter of the through hole 241 on the top cover 200. The insulating piece 400 is stacked between the anode piece 300 and the top cover 200, such that the insulating piece 400 is connected to the anode piece 300 and the top cover 200, for example, the insulating piece 400 may be connected to the top cover 200 by hot-melting, and the insulating piece 400 may be connected to the anode piece 300 by hot-melting. A thickness of the insulating piece 400 may be approximately 0.1 mm. For example, the thickness of the insulating piece 400 may be in a range from 0.05 mm to 0.15 mm, for example, a specific value of the thickness of the insulating piece 400 may be 0.05 mm, 0.09 mm, 0.1 mm, 0.15 mm, or the like. The insulating piece 400 is accommodated in the counterbore 231 of the top cover 200. The thickness of the insulating piece 400 is less than the recessed depth of the counterbore 231, such that the upper surface of the insulating piece 400 is located below the top surface 230, thereby effectively preventing the upper surface of the insulating piece 400 and the top surface 230 of the top cover 200 from being flush with each other. In view of that the insulating piece 400 is accommodated in the counterbore 231 of the top cover 200, the insulating piece 400 can make full use of the existing space of the counterbore 231, such that the insulating piece 400 does not need to occupy the mounting space outside the counterbore 231, and the arrangement of the insulating piece 400 does not increase an overall thickness size of the entire battery.

Referring to FIGS. 3, 4, and 5, in some embodiments, the anode piece 300 is substantially in an annular shape and made of a stainless steel material. The anode piece 300 is disposed on the top cover 200 via the insulating piece 400. One end of the anode tab strip is connected to the rolling core assembly, and the other end of the anode tab strip is welded to the anode piece 300, such that it can be understood that the anode piece 300 can be used as the anode of the battery 10. The anode piece 300 is partially accommodated in the counterbore 231. The anode piece 300 has an upper surface 330 facing away from the accommodating cavity 110, that is, the upper surface 330 faces away from the inner bottom surface 130 of the housing 100. The upper surface 330 is recessed downward towards the accommodating cavity 110 to form a recessed hole 331. The upper surface 330 of the anode piece 300 may be parallel to the top surface 230 of the top cover 200. The upper surface 330 of the anode piece 300 may be spaced apart from the top surface 230 of the top cover 200 in the thickness direction of the battery, that is, the upper surface 330 is located below the top surface 230, such that the upper surface 330 is closer to the accommodating cavity 110 relative to the top surface 230. That is, the upper surface 330 is closer to the lower bottom surface 240 relative to the top surface 230, or it may be understood that the upper surface 330 does not protrude upward from the top surface 230. The anode piece 300 includes a bottom plate portion 310 and a sunken portion 320. The bottom plate portion 310 and the sunken portion 320 are connected to each other, that is, the bottom plate portion 310 is connected around an edge of the sunken portion 320, and the sunken portion 320 is provided protruding downward towards the inner bottom surface 130 relative to the bottom plate portion 310. In short, the sunken portion 320 protrudes downward by a certain length relative to the bottom plate portion 310. Both the bottom plate portion 310 and the sunken portion 320 cooperatively enclose the recessed hole 331.

In view of the presence of the recessed hole 331 in the anode piece 300, the anode piece 300 may have a bottom wall surface 340. The bottom wall surface 340 is a horizontally disposed circular surface, and the bottom wall surface 340 may be disposed parallel to the inner bottom surface 130 of the housing 100 and define part of the boundary of the recessed hole 331. The bottom wall surface 340 is located at the sunken portion 320 and disposed facing away from the accommodating cavity 110. A middle portion of the bottom wall surface 340 is further recessed downward to form a penetration hole 341, which extends through the entire anode piece 300 in a thickness direction of the anode piece 300, such that a lower end of the penetration hole 341 is in communication with the accommodating cavity 110 through the through hole 241, and an upper end of the through hole 241 is in communication with the recessed hole 331. The penetration hole 341 is formed in the sunken portion 320. When the anode piece 300 is fixed to the top cover 200 via the insulating piece 400, the electrolyte can be injected into the accommodating cavity 110 through the penetration hole 341. The sunken portion 320 also has a second surface 321 disposed facing the accommodating cavity 110, that is, the orientations of the second surface 321 and the bottom wall surface 340 are opposite to each other. The penetration hole 341 extends through the second surface 321. The second surface 321 is farthest from the top surface 330 relative to the other surfaces of the anode piece 300 in the thickness direction of the entire battery 10. The anode tab strip on the rolling core assembly is welded to the second surface 321 via the through hole 241, then the first surface 221 and the second surface 321 may be flush with each other. In this way, an end of the first surface 221 is prevented from scratching the anode tab strip, and the insulating material on the anode tab strip is effectively prevented from being damaged. In other embodiments, the first surface 221 and the second surface 321 may be separated from each other by a smaller distance in the thickness direction of the battery 10, for example, the first surface 221 is farther away from the top surface 230 relative to the second surface 321.

The bottom plate portion 310 is connected to the insulating piece 400 by hot melting, and the bottom plate portion 310 is located in the counterbore 231 of the top cover 200. The upper surface 330 is located on the bottom plate portion 310, and the bottom plate portion 310 is stacked on the insulating piece 400. In view of that the upper surface 330 of the bottom plate portion 310 is located below the top surface 230 or just flush with the top surface 230, the bottom plate portion 310 can make full use of the existing space of the counterbore 231, such that the bottom plate portion 310 does not need to occupy the mounting space outside the counterbore 231, and the arrangement of the bottom plate portion 310 does not increase an overall thickness size of the entire battery. The sunken portion 320 may be accommodated in the mounting hole 410 of the insulating piece 400 and the through hole 241 of the top cover 200. In this way, the sunken portion 320 can make full use of the existing space of the mounting hole 410 and the through hole 241, so as to ensure that the sunken portion 320 does not increase the overall thickness size of the entire battery 10, thereby ensuring that the arrangement of the entire anode piece 300 does not increase the thickness size of the entire battery 10.

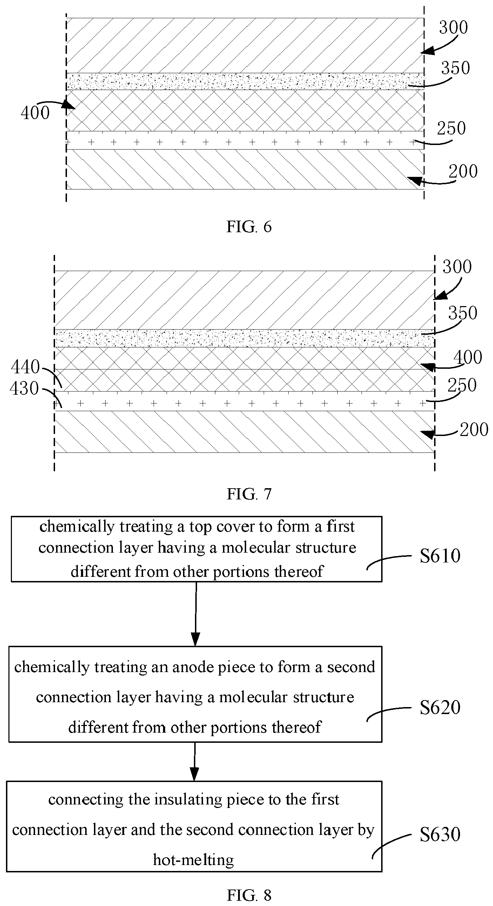

Referring to FIGS. 6 and 7, specifically, the top cover 200 includes a first connection layer 250 having a molecular structure different from other portions of the top cover 200. The anode piece 300 includes a second connection layer 350 having a molecular structure different from other portions of the anode piece 300. The insulating piece 400 is stacked between the first connection layer 250 and the second connection layer 350, and the insulating piece 400 is connected to the first connection layer 250 and the second connection layer 350 by hot-melting, such that the entire top cover 200 and the anode piece 300 are finally connected via the insulating piece 400 by hot-melting. During the hot-melting connection of the first connection layer 250 and the second connection layer 350 via the insulating piece 400, the insulating piece 400 may be divided into two parts having the equal thickness, which may be denoted as a first insulating portion 430 and a second insulating portion 440, respectively. First, the first insulating portion 430 may be connected to the first connection layer 250 by a hot-melting process. Then, the second insulating portion 440 is connected to the second connection layer 350 by the hot-melting process, and finally, the first insulating portion and the second insulating portion 440 are connected to each other by hot-melting. In this way, integral connections between the entire insulating piece 400 and the anode piece 300, and between the entire insulating piece 400 and the top cover 200 can be realized. When the first insulating portion and the second insulating portion 440 are connected to each other by hot-melting, the first insulating portion and the second insulating portion 440 are fused to form an integral insulating piece 400.

In some embodiments, the insulating piece 400 may be formed as an inseparable entirety. For example, after the insulating piece 400 is connected to the first connection layer 250 by hot-melting, the insulating piece 400 is connected to the second connection layer 350 by hot-melting, such that the top cover 200 and the anode piece 300 are connected via the insulating piece 400 by hot-melting. For another example, after the insulating piece 400 is connected on the second connection layer 350 by hot-melting, the insulating piece 400 is connected on the first connection layer 250 by hot-melting, such that the top cover 200 and the anode piece 300 are connected via the insulating piece 400 by hot-melting.

In the hot-melting connection process, the insulating piece 400 is heated such that a part of the insulating piece 400 is melted into be in a viscous state, and then the viscous part is attached to the top cover 200 or the anode piece 300. After the viscous part is cured and formed, the insulating piece 400 is connected to the top cover 200 or the anode piece 300 by hot-melting.

The cross-sectional dimensions of both the insulating piece 400 and the anode piece 300 are less than the cross-sectional dimension of the top cover 200, such that orthographic projections of both the insulating piece 400 and the anode piece 300 in a thickness direction of the top cover 200 are located within the recessed portion 220, such that edges of the bottom plate portion 310 and the insulating piece 400 may be spaced apart from the substrate portion 210 to form an interval 13 in the radial direction of the housing 100. In this way, the edge of the anode piece 300 can be effectively prevented from being in contact with the top cover 200 to cause a short circuit.

In view of the hot-melting connections between the insulating piece 400 and the top cover 200, and between the insulating piece 400 and the anode piece 300, on one hand, the presence of other additional connection layers between the insulating piece 400 and the top cover 200 are effectively avoided, and on the other hand, the presence of other additional connection layers between the insulating piece 400 and the anode piece 300 are avoided, thereby effectively simplifying the structure of the entire cover assembly 20 and reducing a total thickness thereof. On the other hand, the insulating piece 400 is stacked between the first connection layer 250 and the second connection layer 350 and connected to the first connection layer 250 and the second connection layer 350 by hot-melting, such that possible gaps between the insulating piece 400 and the top cover 200, and between the insulating piece 400 and the anode piece 300, in the thickness direction of the battery 10, can be completely eliminated, thereby improving the sealing performance of the insulating piece 400 to the entire battery 10.

In view of that the housing 100 serves as the cathode of the battery 10, and the top cover 200 is welded to the housing 100, both the top cover 200 and the housing 100 can serve as the cathode of the battery 10, and the anode piece 300 serves as the anode of the battery 10. By providing the insulating piece 400, on the one hand, the anode piece 300 and the top cover 200 can be insulated, and the short circuit caused by the electrical conduction between the anode piece 300 and the top cover 200 can be prevented. The insulating piece 400 has an exposed portion 420. When the insulating piece 400 is connected to the bottom plate portion 310, the exposed portion 420 is disposed around the anode piece 300 and is located outside the coverage area of the anode piece 300. By providing the exposed portion 420, other conductors can be further prevented from connecting the anode piece 300 and the top cover 200, thus further enhancing the blocking and insulating effects of the insulating piece 400, and minimizing the short circuit phenomenon of the battery 10. On the other hand, the insulating piece 400 is stacked between the first connection layer 250 and the second connection layer 350 and connected to the first connection layer 250 and the second connection layer 350 by hot-melting, such that the gap between the bottom plate portion 310 and the top cover 200 in the thickness direction of the battery 10 can be completely eliminated, and the electrolyte in the rolling core assembly can be prevented from flowing out of the accommodating cavity 110 through the gap between the bottom plate portion 310 and the top cover 200, that is, the electrolyte can be effectively prevented from leaking, i.e., the insulating piece 400 can also play a good sealing role.

Referring to FIGS. 3, 4, and 5, in some embodiments, the sealing member 500 has a base portion 510 and a boss portion 520 that are connected to each other. The base portion 510 is connected around an edge of the boss portion 520, and the boss portion 520 protrudes downward towards the inner bottom surface 130 relative to the base portion 510. In short, the boss portion 520 protrudes downward by a certain length relative to the base portion 510. The base portion 510 has an outer surface 530 facing away from the accommodating cavity 110, that is, the outer surface 530 faces away from the inner bottom surface 130. The outer surface 530 may be flush with the upper surface 330. Alternatively, the outer surface 530 is closer to the accommodating cavity 110 relative to the upper surface 330, that is, the outer surface 530 is located below the upper surface 330. In the radial direction of the housing 100, that is, in a direction perpendicular to the central axis of the housing 100, a space 11 is formed between an edge of the base portion 510 and the bottom plate portion 310 of the anode piece 300.

In view of that the base portion 510 is located in the recessed hole 331 and the outer surface 530 is located below the upper surface 330, the base portion 510 makes full use of the existing space of the recessed hole 331, ensuring that the base portion 510 does not need to occupy the mounting space outside the recessed hole 331, and the arrangement of the base portion 510 does not increase the overall thickness size of the entire battery 10. In addition, the boss portion 520 is accommodated in the penetration hole 341, such that the boss portion 520 can make full use of the existing space of the penetration hole 341, and ensuring that the boss portion 520 does not increase the overall thickness size of the entire battery 10. This ensures that the arrangement of the entire sealing member 500 does not increase the thickness size of the entire battery 10.

The sealing member 500 may be made of a stainless steel material. The sealing member 500 is welded to the anode piece 300 and serves to block the penetration hole 341. After the electrolyte is injected into the accommodating cavity 110 from the penetration hole 341 through the through hole 241, the sealing member 500 may be welded to the anode piece 300, such that the boss portion 520 seals the penetration hole 341, and thus the electrolyte in the accommodating cavity 110 is prevented from leaking out of the accommodating cavity 110 through the penetration hole 341, that is, the electrolyte is effectively prevented from leaking.

If the anode piece 300, the insulating piece 400, and the top cover 200 are sequentially stacked in the thickness direction of the battery 10, a sum of the respective thicknesses of the anode piece 300, the insulating piece 400, and the top cover 200 will constitute part of the thickness of the battery 10. That is, the arrangement of any one of the anode piece 300, the insulating piece 400, and the top cover 200 will increase the thickness of the battery 10, thereby increasing the thickness of the battery 10, which is not conducive to reducing the volume of the battery 10 to achieve miniaturization.

In batteries 10 in the aforementioned embodiments, by providing the counterbore 231 on the top cover 200, the insulating piece 400 and the anode piece 300 are accommodated in the counterbore 231, and the upper surface 330 is flush with the top surface 230, or the upper surface 330 is located below the top surface 230, such that the thicknesses of the insulating piece 400 and the anode piece 300 do not increase the thickness of the battery 10, thereby compressing the thickness of the battery 10 and reducing the volume of the battery 10 to achieve miniaturization. In addition, the influence of the aforementioned structure arrangement on the volume of the accommodating cavity 110 is negligible, so as to ensure that the accommodating cavity 110 has a large enough volume to ensure that the battery 10 has a reasonable capacity and endurance capacity, and finally ensure that the battery 10 can take into account the two core parameters of both large capacity and small volume, and the improvement of one parameter will not be at the expense of the other parameter.

Further, if the insulating piece 400 is separately press-fitted into the top cover 200 and the anode piece 300 to form a detachable connection, in order to improve the connection strength, the anode piece 300 has to be manufactured into a "cap" structure to cover the entire top cover 200 and cover the housing 100. In this way, on one hand, the thickness of the anode piece 300 constitutes part of the thickness of the battery 10, that is, the presence of the anode piece 300 will increase the thickness of the battery 10, and on the other hand, the surface area and the volume of the anode piece 300 will increase, resulting in an increase in the material cost, while increasing the volume of the battery 10.

In batteries 10 in the aforementioned embodiments, the insulating piece 400 is integrally connected to the top cover 200 and the anode piece 300 by hot-melting connection, such that the anode piece 300 can be effectively prevented from covering the entire top cover 200, and an advantageous condition is created for providing the counterbore 231 on the top cover 200, so as to ensure that the anode piece 300 is accommodated in the counterbore 231 of the top cover 200. On the one hand, the presence of the anode piece 300 does not increase the thickness of the battery 10, on the other hand, the surface areas and the volumes of the insulating piece 400 and the anode piece 300 are reduced, and the material cost is reduced. Finally, the volume of the battery 10 is reduced and its manufacturing cost is reduced.

Referring to FIG. 8, the present application further provide a method of processing a cover assembly, which is used to process the aforementioned cover assembly 20. The method mainly includes the following steps of S610 to S630.

At step S610, the top cover 200 is chemically treated to form a first connection layer 250 having a molecular structure different from other portions thereof.

At step S620, the anode piece 300 is chemically treated to form a second connection layer 350 having a molecular structure different from other portions thereof.

At step S630, the insulating piece 400 is connected to the first connection layer 250 and the second connection layer 350 by hot-melting.

Referring to FIGS. 6, 7, and 8, specifically, the top cover 200 and the anode piece 300 are chemically treated by a chemical liquid including a passivation liquid having a certain acidity, such that the first connection layer 250 including a passivation layer is formed on the top cover 200 and the second connection layer 350 including a passivation layer is formed on the anode piece 300. In view of that both the first connection layer 250 and the second connection layer 350 include passivation layers, the first connection layer 250 has a relatively dense molecular structure relative to other portions of the top cover 200, and the second connection layer 350 also has a relatively dense molecular structure relative to other portions of the anode piece 300. After the aforementioned chemical treatment, the oil stain on the top cover 200 and the anode piece 300 can be removed, and the corrosion resistance of the first connection layer 250 and the second connection layer 350 can be improved, and the connection strength between the first connection layer 250 and the insulating piece 400, and the connection strength between the second connection layer 350 and the insulating piece 400 can be further improved. The first connection layer 250 is integrally connected to the other portions of the top cover 200, and the second connection layer 350 is integrally connected to the other portions of the anode piece 300. After the part of the insulating piece 400 connected to the first connection layer 250 is heated to be viscous, this viscous part is cured and shaped to form a hot-melting connection having a high connection strength with the first connection layer 250. After the part of the insulating piece connected to the second connection layer 350 is heated to be viscous, this viscous part is cured and shaped to form a hot-melting connection having a high connection strength with the second connection layer 350.

Referring to FIG. 6, in some embodiments, the insulating piece 400 is formed into an inseparable entirety. After the insulating piece 400 is connected to the first connection layer 250 by hot-melting, the insulating piece 400 is connected to the second connection layer 350 by hot-melting. Alternatively, after the insulating piece 400 is connected to the second connection layer 350 by hot-melting, the insulating piece 400 is connected to the first connection layer 250 by hot-melting. Finally, the first connection layer 250 and the second connection layer 350 are connected via the insulating piece by hot-melting.

Referring to FIG. 7, in some embodiments, the insulating piece 400 is divided into the first insulating portion 430 and the second insulating portion 440 having equal thicknesses. The first insulating portion 430 is firstly connected to the first connection layer 250 by hot-melting, and then, the second insulating portion 440 is connected to the second connection layer 350 by hot-melting, and finally the first insulating portion 430 and the second insulating portion 440 are connected by hot-melting, such that the first connection layer 250 and the second connection layer 350 can be connected via the insulating piece by hot-melting.

In some embodiments, the roughness of the first connection layer 250 and the second connection layer 350 may be increased by sandblasting, which causing, for example, the roughness of the connection part between the first connection layer 250 and the insulating piece 400, and the roughness of the connection part between the second connection layer 350 and the insulating piece 400 to be maintained between 0.8 µm and 6.3 µm. In this way, the connection force between the insulating piece 400 and the first connection layer 250, and the connection force between the insulating piece 400 and second connection layer 350 can be effectively increased.

The technical features of the above described embodiments can be combined arbitrarily. To simplify the description, not all possible combinations of the technical features in the above embodiments are described. However, all of the combinations of these technical features should be considered as within the scope of the present application, as long as such combinations do not contradict with each other.

The foregoing embodiments are merely some embodiments of the present application, and descriptions thereof are relatively specific and detailed. However, it should not be understood as a limitation to the patent scope of the present application. Therefore, the protection scope of the present application shall be subject to the protection scope of the appended claims.

## Claims

1. A cover assembly, configured to cover on a housing, provided with an accommodating cavity, of a battery, the cover assembly comprising a top cover, an insulating piece, and an anode piece;
wherein the top cover is configured to cover the accommodating cavity, the top cover comprises a first connection layer having a molecular structure different from other portions thereof, the anode piece comprises a second connection layer having a molecular structure different from other portions thereof; the insulating piece is stacked between the first connection layer and the second connection layer, and the insulating piece is connected to the first connection layer and the second connection layer by hot-melting.

2. The cover assembly of claim 1, wherein the top cover and the anode piece are both made of stainless steel material, the insulating piece is made of polypropylene material, and the first connection layer and the second connection layer each comprises a passivation layer.

3. The cover assembly of claim 1, wherein cross-sectional dimensions of the insulating piece and the anode piece are less than a cross-sectional dimension of the top cover, and orthographic projections of both the insulating piece and the anode piece in a thickness direction of the top cover are located within the top cover.

4. The cover assembly of claim 1, wherein taking a direction perpendicular to an axial direction of the housing as a reference direction, intervals are formed between the insulating piece and an edge of the anode piece, and between the insulating piece and an edge pf the top cover.

5. The cover assembly of claim 3, wherein the insulating piece comprises an exposed portion, the exposed portion is disposed around the anode piece and is located outside a coverage area of the anode piece.

6. A battery, comprising a housing and the cover assembly of any one of claims 1 to 5, the housing being provided with the accommodating cavity, the top cover and the housing being connected to cover the accommodating cavity.

7. A method of processing a cover assembly, comprising:
chemically treating a top cover to form a first connection layer having a molecular structure different from other portions thereof;
chemically treating an anode piece to form a second connection layer having a molecular structure different from other portions thereof; and
connecting an insulating piece to the first connection layer and the second connection layer by hot-melting.

8. The method of processing the cover assembly of claim 7, wherein the top cover and the anode piece are both made of stainless steel material, the chemical treating comprises a passivation treating such that the first connection layer and the second connection layer each comprises a passivation layer.

9. The method of processing the cover assembly of claim 7, wherein the insulating piece is integrally connected to the first connection layer and the second connection layer by hot-melting, respectively.

10. The method of processing the cover assembly of claim 7, wherein the insulating piece comprises a first insulating portion and a second insulating portion capable of being stacked to each other; after the first insulating portion and the second insulating portion are connected to the first connection layer and the second connection layer by hot-melting, respectively, the first insulating portion and the second insulating portion are connected by hot-melting.

11. The method of processing the cover assembly of claim 7, wherein a roughness of the first connection layer and a roughness of the second connection layer are maintained between 0.8 µm and 6.3 µm, and then the insulating piece is connected to the first connection layer and the second connection layer by hot-melting.
